Europäisches Patentamt

European Patent Office

Office européen des brevets

(19)

(11) Veröffentlichungsnummer : **0 078 048**
**B1**

(12) **EUROPÄISCHE PATENTSCHRIFT**

(45) Veröffentlichungstag der Patentschrift :
30.01.85

(21) Anmeldenummer : 82109856.3

(22) Anmeldetag : 26.10.82

(51) Int. Cl.⁴ : **F 16 B   7/04**, F 16 B 12/44

(54) **Befestigungselement zur lösbaren Verbindung von windschief oder parallel angeordnete Stäben, Rohren oder ähnlichen Bauelementen.**

(30) Priorität : 26.10.81 HU 313981

(43) Veröffentlichungstag der Anmeldung :
04.05.83 Patentblatt 83/18

(45) Bekanntmachung des Hinweises auf die Patenterteilung : 30.01.85 Patentblatt 85/05

(84) Benannte Vertragsstaaten :
AT BE CH DE FR GB IT LI NL SE

(56) Entgegenhaltungen :
AU-B-   493 681
CH-A-   582 836
FR-A-  2 399 193

(73) Patentinhaber : **MAGYAR ALUMINIUMIPARI TRÖSZT**
**Pozsonyi ut. 56**
**H-1133 Budapest (HU)**

(72) Erfinder : **Gillemot, László, Dr. Dipl.-Ing.**
**Gábor Aron u. 48**              ,
**H-1022 Budapest (HU)**
Erfinder : **Pataki, Endre, Dipl.-Ing.**
**Hamzsabégi u. 33**
**H-1114 Budapest (HU)**
Erfinder : **Prodan, János, Dipl.-Ing.**
**Bajcsy Zs. u. 54**
**H-1054 Budapest (HU)**
Erfinder : **Zuckermann, Ernö**
**Himzö u. 6**
**H-1039 Budapest (HU)**

(74) Vertreter : **Patentanwälte Viering & Jentschura**
**Steinsdorfstrasse 6**
**D-8000 München 22 (DE)**

## Beschreibung

Gegenstand der Erfindung ist ein Befestigungselement, das auf eine einfache Weise eine lösbare Verbindung zwischen räumlich angeordneten oder parallelen Stäben, Rohren und ähnlichen Elementen ermöglicht. Hinsichtlich der Verwendung der Erfindung können Stäbe, Rohre oder Profilteile beliebigen Querschnitts in Betracht kommen. Diese werden im weiteren der Einfachheit halber als Stäbe bezeichnet.

Bekanntlich werden bei den Bau-, Instandhaltungs-, Montage- bzw. Installationsgerüstsystemen die Stäbe durch Schellenverbindungen, Überlaschungen, Aufplattungen und ähnliche Verbindungen aneinander befestigt.

Die Beschreibung derartiger Befestigungselemente ist z. B. in den DE-A-2 903 119, 2 308 093 und 2 801 176 zu lesen. Nachteil der bekannten lösbaren Verbindungen ist es, daß zur Fixierung mehrere Klemmelemente erforderlich sind, sowie daß sie sich im allgemeinen nur zur Verbindung von zwei Stäben eignen.

Im Verlauf der Entwicklung der Befestigungselemente wurde angestrebt, daß diese möglichst wenig Bauteile enthalten, demzufolge die Montage und Demontage der Stäbe einfach durchführbar und die Fixierung meistmöglichst fest und sicher erfolgt. Diesen Zielsetzungen entspricht zum Teil das in der US-A-4 066 371 beschriebene Befestigungselement, das aus einem Grundkörper mit den zu befestigenden Stäben entsprechenden Bohrungen und einer mit den Bohrungen in Berührung befindlichen Befestigungsöffnung und einem in axialer Richtung mittels einer Schraube festklemmbaren Feststelleinsatz sowie einer zum Festklemmen des Feststelleinsatzes geeigneten Schraubenmutter besteht. Der Feststelleinsatz berührt geometrisch entlang je einer Kante die in den Bohrungen angeordneten Stäbe. Nach dem Festklemmen des Feststelleinsatzes sichert diese Berührung die Verbindung. Vorteil des Befestigungselementes ist, daß es einfach und leicht zu handhaben ist und durch seine Bohrungen die räumliche Lage der miteinander verbundenen Stäbe bestimmt. Sein Nachteil besteht jedoch darin, daß die dadurch hergestellte Verbindung nicht genügend fest und nicht gleichmäßig ist.

Ziel der Erfindung ist die Schaffung eines vervollkommneten Befestigungselementes, das über sämtliche Vorteile der vorgenannten Befestigungselemente verfügt und gleichzeitig eine feste sichere und gleichmäßige Befestigung ermöglicht.

Ein weiteres Ziel der Erfindung besteht darin, daß das Befestigungselement aus möglichst wenig Bauteilen besteht und nach einer einfachen Technologie hergestellt werden kann.

Die Aufgabe wird im Sinne der Erfindung durch ein Befestigungselement erfüllt, das aus einem Grundkörper mit mindestens einer Feststellbohrung, je Feststellbohrung zwei, mindestens die Feststellbohrung anschneidenden, parallel und/oder windschief zueinander verlaufenden Aufnahmebohrungen für die Bauelemente und aus einem in axialer Richtung festklemmbar ausgeführten Klemmeinsatzstück besteht, das ein Formkörper mit parallelen Mantellinien ist und das nach der Form und Anordnung den Anschnitten der Feststellbohrung entsprechende Aussparungen aufweist.

Die Außenform des Grundkörpers ist hinsichtlich der Erfindung unkritisch. Sie kann nach den Verbraucherwünschen sowie nach fertigungstechnologischen Gesichtspunkten ausgewählt werden. Trotzdem wird es bevorzugt, daß der Grundkörper kugelförmig ist, wobei jedoch auch eine Zylinder- oder Prismenform vorteilhaft sein kann.

Der Werkstoff des Grundkörpers ist der zu erwartenden Belastung entsprechend auszuwählen : im allgemeinen werden die Grundkörper aus Metall, insbesondere Aluminium gefertigt, können jedoch aus jedem anderen Werkstoff so auch aus Kunststoff hergestellt sein.

Im Grundkörper können eine oder mehrere Feststellbohrungen vorgesehen sein. Sind es mehrere Feststellbohrungen, so können diese parallel oder windschief zueinander angeordnet sein ; ihr Querschnitt und ihre Abmessungen können gleich oder unterschiedlich sein. Die Feststellbohrungen weisen vorteilhafterweise einen Kreisquerschnitt auf, können jedoch auch andere Querschnittsformen haben, z. B. vieleckig sein.

Enthält der Grundkörper mehrere Feststellbohrungen, so können seine die einzelnen Feststellbohrungen enthaltenden Teile auch gegeneinander verdrehbar ausgeführt sein.

Zu jeder Feststellbohrung gehören im allgemeinen zwei oder drei diese anschneidende Aufnahmebohrungen, wobei jedoch der Grundkörper neben einer Feststellbohrung auch mehr als drei Aufnahmebohrungen aufweisen kann. Querschnitt und Abmessungen der Aufnahmebohrungen entsprechen dem Querschnitt und den Abmessungen der zu verbindenen Stäbe.

Die Aufnahmebohrungen sind im allgemeinen windschief zueinander, können jedoch auch parallel angeordnet sein. Sie müssen jedoch die zugeordnete Feststellbohrung quer zu deren Längsrichtung derart anschneiden, daß ihre Achsen windschief zu der Achse der Feststellbohrung verlaufen und eine Querchnittsabschnitt ihrer Umfangsfläche die Umfangsfläche der Feststellbohrung schneidet. Die räumliche Anordnung der Achslinien der Aufnahmebohrungen wird durch, den von dem aneinander zu befestigenden Stäbe eingeschlossenen Winkel bestimmt.

Die Aufnahmebohrungen können im Vergleich zueinander und auch zur Feststellbohrung unterschiedliche Abmessungen aufweisen. Die zweckdienlichen Proportionen der Feststellbohrung und der Aufnahmebohrungen sowie das Ausmaß der Verschneidung der Aufnahmebohrungen und der Feststellbohrung werden durch die Festigkeit des Werkstoffes des Befestigungselementes und durch die Beanspruchung bestimmt.

In der Feststellbohrung ist ein bolzenartiges Klemmeinsatzstück angeordnet, in dem den Anschnitten der Feststellbohrung entsprechende Vertiefungen bzw. Aussparungen ausgebildet sind. Das Klemmstück ist in axialer Richtung verstellbar ausgeführt, z. B. auf die Weise, daß in seinem einen Ende in axialer Richtung ein Gewinde und darin eine Spannschraube vorgesehen ist. Vorteilhaft kann auch eine Ausführung sein, bei der das Gewinde auf dem Klemmstück vorgesehen ist und darauf eine Schraubenmutter aufgeschraubt werden kann. Gegebenenfalls ist an dem der Spannschraube gegenüberliegenden Ende des Klemmstückes eine Paßfeder vorgesehen, die in eine in dem Grundkörper befindliche Nut eingreift.

Die Paßfeder ist in erster Linie bei Klemmstücken mit Kreisquerschnitt vorteilhaft, da sie deren unerwünschtes Verdrehen verhindert.

Die Erfindung wird im nachstehenden anhand von beispielhaften Ausführungsformen detaillierter mit Hilfe der Zeichnung beschrieben. In der Zeichnung zeigt:

Figur 1 eine günstige Ausführungsform der Grundkörper des Befestigungselementes in der Ansicht,

Figur 2 das zum Grundkörper nach Fig. 1 gehörende Spannstück in Ansicht teilweise im Schnitt, und

Figur 3 eine andere vorteilhafte Ausführungsform des Grundkörpers im Schnitt mit sechseckigen Querschnitt aufweisenden Aufnahmebohrungen.

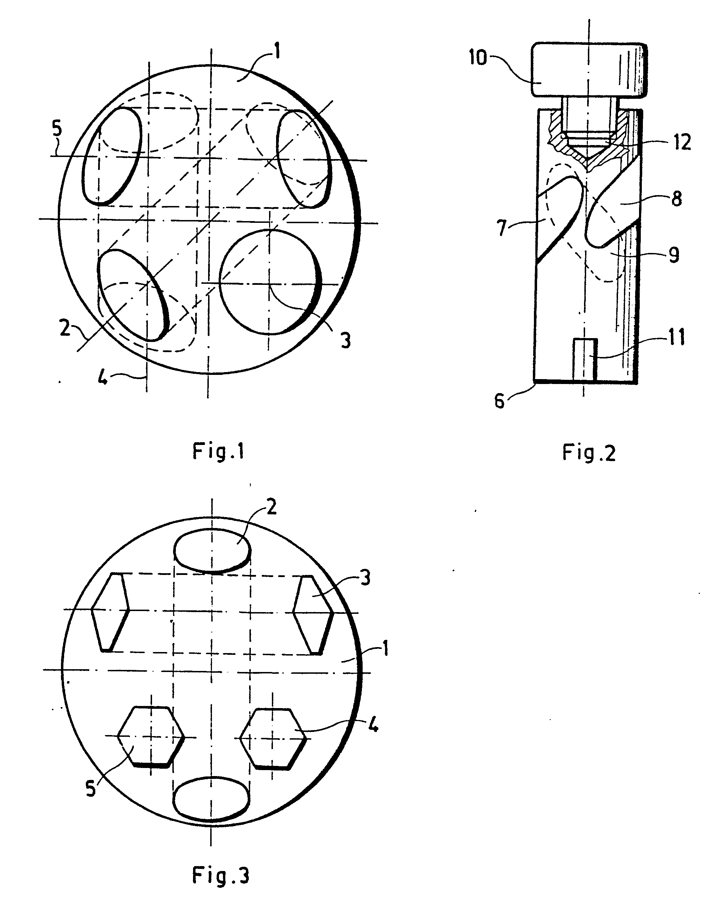

Bei der in Fig. 1 und Fig. 2 dargestellten Ausführungsform ist der Grundkörper 1 kugelförmig, und mit einer zylindrischen Feststellbohrung 2 versehen. Weiterhin sind darin die quer zur Feststellbohrung 2 verlaufenden Aufnahmebohrungen 3, 4 und 5 zur Aufnahme der zu befestigenden Stäbe vorgesehen. Diese Aufnahmebohrungen 3, 4 und 5 sind windschief zueinander angeordnet und kreuzen die Feststellbohrung radial im Abstand von deren Achse, so daß sie mit der Feststellbohrung 2 je einen Anschnitt derselben bilden. In die Feststellbohrung 2 kann das Klemmeinsatzstück 6 eingesetzt werden, in dessen zylindrischem Mantel die den genannten Anschnitten der Feststellbohrung 2 entsprechende Form und Anordnung aufweisenden Aussparungen 7, 8 und 9 vorgesehen sind, wie diese aus Fig. 2 ersichtlich sind. In dem einen Ende des Klemmeinsatzstückes 6 ist die axial angeordnete Gewindebohrung 12 ausgebildet, in die die Spannschraube 10 eingeschraubt ist, die mit ihrem Kopf an dem einen Rand der Feststellbohrung am Grundkörper 1 abstützbar ist. An dem gegenüberliegenden Ende des Klemmeinsatzstückes 6 ist die Paßfeder 11 angeordnet, die in eine im Grundkörper 1 vorgesehene — nicht dargestellte — Nut eingreift.

Bei der in Fig. 3 dargestellten Ausführungsform sind im Grundkörper 1 die zylindrische Feststellbohrung 2, weiterhin die diese anschneidenden, Sechseckquerschnitt aufweisenden Aufnahmebohrungen 3, 4 und 5 vorgesehen. Die Aufnahmebohrung 4 und die Aufnahmebohrung 5 sind zueinander parallel angeordnet.

Das erfindungsgemäße Befestigungselement ist nach Einsetzen des Klemmeinsatzstückes 6 in den Grundkörper 1 zum Zusammenbau mit Stäben geeignet. Das Klemmeinsatzstück 6 ist so in den Grundkörper 1 einzusetzen, daß die den Anschnitten entsprechenden Aussparungen 7, 8, 9 sich mit diesen decken. D. h., daß in die Aufnahmebohrungen 3, 4 und 5 die entsprechenden Stäbe ungehindert eingeführt werden können. Nach dem Einsetzen der Stäbe wird die Spannschraube 10 angezogen, demzufolge deren Kopf auf dem Grundkörper 1 aufliegt und das Klemmeinsatzstück 6 in axialer Richtung anzieht, wodurch dieses entlang der Begrenzungsflächen der den Anschnitten entsprechenden Aussparungen 7, 8, 9 an die stäbe angepreßt wird. Die Befestigung kann auf diese Weise durch Anziehen einer einzigen Schraube bewirkt werden.

Das erfindungsgemäße Befestigungselement kann auf einfache Art und Weise hergestellt werden. Der Grundkörper 1 und das Klemmeinsatzstück 6 werden vorzugsweise aus dem gleichen Werkstoff hergestellt. Ist dieser Werkstoff ein Metall, so können der Grundkörper 1 bzw. das Klemmeinsatzstück 6 am vorteilhaftesten durch Gießen, ist der werkstoff ein Kunststoff so durch Spritzgießen hergestellt werden. Für starke Beanspruchungen bestimmte Elemente sind vorzugsweise durch Schmieden herzustellen, wobei jedoch das Befestigungselement auch durch spanabhebende Bearbeitung hergestellt werden kann. Die Bohrungen werden in der üblichen Weise hergestellt, zweckdienlicherweise so, daß zuerst die Feststellbohrung 2 in der geometrischen Mittellinie des Grundkörpers ausgebohrt und dann in diese das Klemmeinsatzstück 6 eingesetzt wird, wonach dann die Aufnahmebohrungen 3, 4 und 5 hergestellt werden können. Hat das Klemmstück 6 einen Kreisquerschnitt, so ist im Verlaufe des letztgenannten Arbeitsganges die Sicherung gegen Verdrehung vorzusehen. Dies kann z. B. durch Anwendung der bereits genannten Paßfeder 11 vorgenommen werden. In gewissen Fällen, so z. B. bei der Serienfertigung, sind die Aufnahmebohrungen 3, 4 und 5 vorteilhafterweise von dem Klemmeinsatzstück 6 unabhängig zu fertigen.

Das erfindungsgemäße Befestigungselement weist gegenüber den bisher bekannten Ausführungsformen folgenden Hauptvorteile auf:

Es sichert eine Verbindung hoher Festigkeit ohne übermäßige Oberflächenbeanspruchung des Gestänges.

Es ermöglicht eine gleichmäßige Verbindung in allen räumlichen Richtungen.

Die Kraftausübung des Befestigungselementes ist auf alle eingeführten Stäbe praktisch gleich.

Die Ausführungsform ist schon an sich ansprechend (ästhetisch) und kann nötigenfalls noch durch eine Oberflächenbehandlung verbessert werden.

Unter Anwendung des Ähnlichkeitsprinzips kann eine sich in ihren Anmessungen an die Stäbe und Profile anpassende Befestigungselementen-Baureihe (Familie) entwickelt werden.

Im Falle von von den normalen Größen abweichende Abmessungen aufweisenden Stäben und Rohren kann die entsprechende Baugröße der Maßbaureihe auch nachträglich auf das gewünschte Maß umgeformt werden.

**Ansprüche**

1. Befestigungselement zur lösbaren Verbindung von windschief oder parallel angeordneten Stäben, Rohren oder sonstigen Bauelementen, das aus einem Grundkörper (1) mit mindestens einer Feststellbohrung (2) und mit je Feststellbohrung (2) mindestens zwei, die Feststellbohrung (2) anschneidenden, parallel oder windschief zueinander verlaufenden Aufnahmebohrungen (3, 4, 5) für die Bauelemente, und aus einem in der Feststellbohrung angeordneten, in axialer Richtung festklemmbar ausgeführten Klemmeinsatzstück (6) besteht, dadurch gekennzichnet, daß das Klemmeinsatzstück (6) ein Formstück mit parallelen Mantellinien ist und den Anschnitten der Aufnahmebohrungen (3, 4, 5) mit der Feststellbohrung (2) nach Form und Anordnung entsprechende Aussparungen (7, 8, 9) aufweist.

2. Befestigungselement nach Anspruch 1, dadurch gekennzeichnet, daß die die axiale Bewegung des Klemmeinsatzstückes (6) bewirkenden Elemente aus einer im Klemmeinsatzstück (6) vorgesehenen axialen Gewindebohrung (12) und einer in diese eingeschraubten Spannschraube (10) bestehen.

3. Befestigungselement nach Anspruch 1, dadurch gekennzeichnet, daß die die axiale Bewegung des Klemmeinsatzstückes (6) bewirkenden Elemente aus einem an dem Klemmeinsatzstück (6) ausgebildeten Gewindezapfen und einer auf diesen aufgeschraubten Schraubmutter bestehen.

4. Befestigungselement nach einem der Ansprüche 1 bis 3, dadurch gekennzeichnet, daß an dem den Spannelementen entgegengesetzten Ende des Klemmeinsatzstückes (6) ein Führungselement (11), und im Grundkörper (1) eine das Führungselement (11) aufnehmende Nut vorgesehen sind.

5. Befestigungselement nach einem der Ansprüche 1 bis 4, dadurch gekennzeichnet, daß der Grundkörper (1) kugelförmig ist.

6. Befestigungselement nach einem der Ansprüche 1 bis 4, dadurch gekennzeichnet, daß der Grundkörper (1) zylindrisch oder prismenförmig ist.

7. Befestigungselement nach einem der Ansprüche 1 bis 6, dadurch gekennzeichnet, daß im Grundkörper (1) mehrere Feststellbohrungen (2) vorgesehen sind und daß die die einzelnen Feststellbohrungen (2) enthaltenden Teile gegeneinander verdrehbar ausgeführt sind.

8. Befestigungselement nach einem der Ansprüche 1 bis 7, dadurch gekennzeichnet, daß die Feststellbohrung (2) und das Klemmstück (6) einen Kreisquerschnitt aufweisen.

9. Befestigungselement nach einem der Ansprüche 1 bis 8, dadurch gekennzeichnet, daß die Aufnahmebohrungen (3, 4, 5) einen vier- oder sechseckigen Querschnitt aufweisen.

**Claims**

1. Fastening element for the releasable connection of skew-whiff or parallel rods, pipes or similar constructional parts consisting of a basic body (1) with at least one locking bore (2) and per locking bore at least two receiving bores (3, 4, 5) that intersect the locking bore and extend in parallel or skew-whiff relative to each other (3, 4, 5) for accomodating the constructional parts and an axially clampable locking insert member (6) arranged in the locking bore, characterised in that the locking insert member (6) is a shaped piece with parallel surface lines and is provided with recesses (7, 8, 9) corresponding in shape and arrangement to the intersections of the receiving bores (3, 4, 5) and the locking bore (2).

2. Fastening element according to claim 1, characterised in that the parts bringing about the axial movement of the locking insert member (6) consist of an axially threaded bore (12) in the locking insert member (6) and a locking screw (10) screwed into the threaded bore (12).

3. Fastening element according to claim 1, characterised in that the parts bringing about the axial movement of the locking insert member (6) consist of a spigot formed on the locking insert member (6) and a threaded nut screwed on the spigot.

4. Fastening element according to any of claims 1 to 3, characterised in that a guide element (11) is provided at the end of locking insert member (6) opposite to the clamping elements and a groove for accomodation of the guide element (11) is provided in the basic body (1).

5. Fastening element according to any of claims 1 to 4, characterised in that the basic body (1) is spherical.

6. Fastening element according to any of claims 1 to 4, characterised in that the basic body (1) is cylindrical or prismatic.

7. Fastening element according to any of claims 1 to 6, characterised in that the basic body (1) is provided with a plurality of locking bores (2) and that the parts containing the individual locking bores (2) are rotatable relative to each other.

8. Fastening element according to any of claims 1 to 7, characterised in that the locking bore (2) and the locking insert member (6) are of circular cross-section.

9. Fastening element according to any of claims 1 to 8, characterised in that the receiving bores (3, 4, 5) are of quadrangular or hexagonal cross-section.

## Revendications

1. Organe d'assemblage pour la jonction amovible de barres, de tubes ou d'éléments d'assemblage analogues disposés en position déjetée ou parallèle, se composant d'un corps de base (1) avec au moins un alésage de fixation (2) et pour chaque alésage de fixation (2) au moins deux alésages de réception (3, 4, 5) pour les éléments d'assemblage, qui se croisent et sont disposés en position parallèle ou déjetée l'un par rapport à l'autre et d'une pièce d'insertion de serrage (6) disposée dans l'alésage de fixation où elle est susceptible d'être bloquée en position axiale, caractérisé en ce que la pièce d'insertion de serrage (6) est une pièce de forme avec des lignes d'enveloppe parallèles et qui présente les passages des alésages de réception (3, 4, 5) disposés dans l'alésage de fixation (2) sous la forme de découpes correspondantes (7, 8, 9).

2. Organe d'assemblage selon la revendication 1, caractérisé en ce que l'organe réalisant le déplacement axial de la pièce d'insertion de serrage (6) est constitué d'un alésage fileté (12) disposé axialement dans la pièce d'insertion de serrage (6) et d'une vis de serrage (10) vissée dans cet alésage.

3. Organe de fixation selon la revendication 1, caractérisé en ce que l'organe réalisant le déplacement axial de la pièce d'insertion de serrage (6) est constitué d'une tige filetée formée sur la pièce d'insertion de serrage (6) et d'un écrou vissé sur cette tige filetée.

4. Organe de fixation selon l'une des revendications 1 à 3, caractérisé en ce qu'à l'extrémité de la pièce d'insertion de serrage (6) opposée à l'organe de serrage, sont prévus un organe de guidage (11) et dans le corps de base (1), une rainure de réception de l'organe de guidage (11).

5. Organe de fixation selon l'une des revendications 1 à 4, caractérisé en ce que le corps de base (1) est sphérique.

6. Organe de fixation selon l'une des revendications 1 à 4, caractérisé en ce que le corps de base (1) est cylindrique ou prismatique.

7. Organe de fixation selon l'une des revendications 1 à 6, caractérisé en ce que plusieurs alésages de fixation (2) sont prévus dans le corps de base (1) et en ce que les parties recevant les alésages de fixation séparés (2) sont agencées pour tourner l'une par rapport à l'autre.

8. Organe de fixation selon l'une des revendications 1 à 7, caractérisé en ce que l'alésage de fixation (2) et la pièce de serrage (6) présentent une section circulaire.

9. Organe de fixation selon l'une des revendications 1 à 8, caractérisé en ce que les alésages de réception (3, 4, 5) présentent une section quadrangulaire ou hexagonale.

Fig.1

Fig.2

Fig.3